# EUROPÄISCHE PATENTANMELDUNG

(11) **EP 4 779 668 A1**
(43) Veröffentlichungstag der Anmeldung: **22.07.2026**
(21) Anmeldenummer: 25152251.2
(22) Anmeldetag: 16.01.2025
(51) Int. Cl.: H01H 23/04, H02G 3/14, H02G 3/16

(54) **ANORDNUNG UMFASSEND EIN SCHALTGERÄT DER GEBÄUDEINSTALLATIONSTECHNIK MIT EINEM SOCKEL UND DREI DECKPLATTEN**

(71) Anmelder: Albrecht Jung GmbH & Co. KG, 58579 Schalksmühle (DE)
(72) Erfinder: Stracke, Martin, 58762 Altena (DE); Soleinsky, Stefan, 58566 Kierspe (DE)

(57) **Zusammenfassung**

Vorgestellt wird eine Anordnung umfassend ein Schaltgerät der Gebäudeinstallationstechnik, insbesondere ein Schalter oder ein Taster, und eine erste, eine zweite und eine dritte Deckplatte D1, D2, D3, wobei das Schaltgerät der Gebäudeinstallationstechnik ein Betätigungselement B sowie eine an eine Energieversorgung anschließbare Sockeleinheit S aufweist, wobei die Deckplatten D1, D2, D3 Rastelemente R zum jeweiligen Anschluss an die Sockeleinheit S aufweisen, wobei die erste Deckplatte D1 eine Höhe H1 von mindestens 1 cm zur Einhausung einer Elektronikbaugruppe ist, wobei die zweite Deckplatte D2 eine ebene Deckplatte mit einer Höhe H2 von weniger als 1 cm zur Abdeckung einer Rückseite der Sockeleinheit S ist, und wobei die dritte Deckplatte D3 eine Vor- V und Rücksprünge RS aufweisende Deckplatte ist, wobei die Vorsprünge V zur Einhausung von Spreizkrallen SK ausgebildet sind, wobei jede Deckplatte D1, D2, D3 Kabeleinführungsöffnungen Ö aufweist.

## Beschreibung

Die Erfindung betrifft eine Anordnung umfassend ein Schaltgerät der Gebäudeinstallationstechnik, insbesondere einen Schalter oder einen Taster, und eine erste, eine zweite und eine dritte Deckplatte, wobei das Schaltgerät der Gebäudeinstallationstechnik ein Betätigungselement sowie eine an eine Energieversorgung anschließbare Sockeleinheit aufweist, wobei die Deckplatten Rastelemente zum jeweiligen Anschluss an die Sockeleinheit aufweisen, wobei die erste Deckplatte eine Höhe von mindestens 1 cm zur Einhausung einer Elektronikbaugruppe ist, wobei die zweite Deckplatte eine ebene Deckplatte mit einer eine Höhe von weniger als 1 cm zur Abdeckung einer Rückseite der Sockeleinheit ist und wobei die dritte Deckplatte eine Vor- und Rücksprünge aufweisende Deckplatte ist, wobei die Vorsprünge zur Einhausung von Spreizkrallen ausgebildet sind, wobei jede Deckplatte Kabeleinführungsöffnungen aufweist.

Schaltgeräte der Gebäudeinstallationstechnik werden milliardenfach eingesetzt, um Licht zu schalten, Jalousien zu verfahren oder dergleichen. Eine Beleuchtungsfunktion mit Zustandsanzeige eines angeschlossenen Aktors weisen diese Schaltgeräte der Gebäudeinstallationstechnik nicht auf.

Derartige Schaltgeräte der Gebäudeinstallationstechnik können sowohl über Schraublöcher im Tragring als auch über eine Spreizkralle montiert werden, also: an einer Installationsdose festgelegt werden. Im Stand der Technik werden hierfür die gleichen Schaltersockel inklusive einer fest darauf angeordneten Deckplatte verwendet.

Nachteilig bei derartigen Schaltgeräten der Gebäudeinstallationstechnik ist, dass der zur Verfügung stehende Einbauraum in der Installationsdose, beispielsweise für Leitungsgut oder für hinter ein Schaltgerät installierte Funktionsmodule, die beispielsweise aus DE 10 2023 133 998 B3 bekannt sind, nicht optimal genutzt wird. Dies führt häufig zur Verwendung von tieferen Montagedosen.

Ausgehend von diesem diskutierten Stand der Technik liegt der Erfindung die Aufgabe zugrunde, eine Anordnung mit einem Schaltgerät der Gebäudeinstallationstechnik mit einem Sockel zu schaffen, die den in der Installationsdose zur Verfügung stehenden Einbauraum optimal ausnutzt beziehungsweise maximiert.

Gelöst wird diese Aufgabe durch eine Anordnung umfassend ein Schaltgerät der Gebäudeinstallationstechnik, insbesondere einen Schalter oder einen Taster, und eine erste, eine zweite und eine dritte Deckplatte, wobei das Schaltgerät der Gebäudeinstallationstechnik ein Betätigungselement sowie eine an eine Energieversorgung anschließbare Sockeleinheit aufweist, wobei die Deckplatten Rastelemente zum jeweiligen Anschluss an die Sockeleinheit aufweisen, wobei die erste Deckplatte eine Höhe von mindestens 1 cm zur Einhausung einer Elektronikbaugruppe ist, wobei die zweite Deckplatte eine ebene Deckplatte mit einer eine Höhe von weniger als 1 cm zur Abdeckung einer Rückseite der Sockeleinheit ist und wobei die dritte Deckplatte eine Vor- und Rücksprünge aufweisende Deckplatte ist, wobei die Vorsprünge zur Einhausung von Spreizkrallen ausgebildet sind, wobei jede Deckplatte Kabeleinführungsöffnungen aufweist.

Damit wird es vorteilhafterweise durch die erfindungsgemäße Anordnung ermöglicht, auf unterschiedliche Anwendungsfälle des Schaltgerätes der Gebäudeinstallationstechnik individuell einzugehen, indem jeweils eine auf die Anforderung (beispielsweise möglich geringe Einbautiefe ohne Spreizkrallenbefestigung oder Unterbringung von weiteren Elektronikbaugruppen oder Spreizkralleneinhausung) angepasste Deckplatte als erste, zweite oder dritte Deckplatte auf denselben Schaltersockel via Rastelemente aufgerastet werden kann.

Dabei weist die erste Deckplatte eine Höhe von mindestens 1 cm zur Einhausung einer Elektronikbaugruppe auf. Damit können Elektronikbauteile wie beispielsweise Relais, Dimmer, Kondensatoren oder dergleichen platzsparend hinter dem Schaltgerät angeordnet werden. Dabei ist die erste Deckplatte bevorzugt als Gehäuse mit Deckel aber ohne Boden ausgeführt.

Dadurch dass erfindungsgemäß die zweite Deckplatte eine ebene Deckplatte mit einer eine Höhe von weniger als 1 cm zur Abdeckung einer Rückseite der Sockeleinheit ist, kann beispielsweise eine etwa 4mm flachere Bauform des Schaltgerätes erreicht werden.

Die dritte Deckplatte ist erfindungsgemäß eine Vor- und Rücksprünge aufweisende Deckplatte, wobei die Vorsprünge zur Einhausung von Spreizkrallen ausgebildet sind, so dass Benutzer vor Verletzungen geschützt sind, indem die Spreizkrallen umschlossen werden.

Jede der Deckplatten weist dabei erfindungsgemäß Kabeleinführungsöffnungen auf, um beispielsweise Kabel zur Energieversorgung und/oder als Steuerleitung an das Schaltgerät anschließen zu können.

Im Ergebnis wird mit der erfindungsgemäßen Anordnung der in der Installationsdose zur Verfügung stehende Einbauraum optimal ausgenutzt beziehungsweise maximiert, indem ein und dieselbe Sockeleinheit mit drei unterschiedlichen Deckplatten kombinierbar wird. Eine Deckplatte im Sinne der Erfindung ist ein Isolationskörper mit Blick auf spannungsführende Bauteile auf der Rückseite eines Schaltgerätes, so dass die Berührungssicherheit hergestellt wird.

Gemäß einer bevorzugten Weiterbildung der erfindungsgemäßen Anordnung weist die erste Deckplatte einen Absatz bezüglich der Kabeleinführungsöffnungen auf. Damit wird eine besonders effiziente Bauraumausnutzung erreicht.

In einer bevorzugten Weiterbildung der erfindungsgemäßen Anordnung weisen die Kabeleinführungsöffnungen eine Phase zur vereinfachten Kabeleinführung auf.

Gemäß einer Weiterbildung der erfindungsgemäßen Anordnung beträgt die Anzahl der Rastelemente mindestens vier. Hierdurch wird ein besonders fester Sitz der Deckplatte auf der Sockeleinheit verbunden mit geringen und gleichmäßigen Spaltmaßen ermöglicht. Bevorzugt ist im Bereich jeder Kabeleinführungsöffnung mindestens ein Rastelement angeordnet. Damit wird ein möglichst geringes Spaltmaß im Bereich der spannungsführenden, abisolierten, Kabel sichergestellt.

Gemäß einer außerordentlich bevorzugten Weiterbildung der erfindungsgemäßen Anordnung ist die erste Deckplatte bevorzugt als Gehäuse mit Deckel aber ohne Boden ausgeführt. Damit wird der effektiv für Elektronikkomponenten nutzbare Bauraum weiter maximiert, ohne zusätzliche Sicherheitsrisiken einzugehen.

Gemäß einer Weiterbildung der erfindungsgemäßen Anordnung weist die zweite Deckplatte einen Flansch auf, der in eine Halterung für Spreizkrallen der Sockeleinheit eingesetzt ist. Damit wird die zweite Deckplatte zusätzlich an die Sockeleinheit angebunden.

Gemäß einer Weiterbildung der erfindungsgemäßen Anordnung weist die erste, zweite und dritte Deckplatte auf Ihrer, im Einbau zur Wand weisenden, Rückseite eine ausnehmungslose, zusammenhängende Fläche von mindestens 5,5cm², bevorzugt sogar mindestens 9cm², auf. Damit wird es auf intelligente Weise ermöglicht, auf der Baustelle mit regelmäßig schlechten Lichtverhältnissen die, auf der ausnehmungslosen, zusammenhängenden Fläche aufgebrachte Informationen besser lesbar zu machen, da die Informationen in angenehmer Größe dargestellt werden können und eine zerklüftete beziehungsweise verteilte Darstellung von Informationen, beispielsweise von Text, Schaltbildern oder QR-Codes, somit wirksam vermieden wird.

In einer Weiterbildung der erfindungsgemäßen Anordnung weist diese eine vierte Deckplatte auf, die einen zusätzlichen Klemmblock aufweist, so dass ein zweibahniges Schaltgerät zu einem dreibahnigen Schaltgerät wird. Hierdurch wird die Modularität der erfindungsgemäßen Anordnung weiter verbessert.

Gemäß einer außerordentlich bevorzugten Weiterbildung der erfindungsgemäßen Anordnung weisen die Deckplatten eine Lichtlleiterdurchführungsausnehmung auf, um einen Lichtleiter vom Bereich der Deckplatten in den Bereich des Betätigungselementes zu lenken. Hierdurch wird es auf geschickte Weise ermöglicht, im Bereich des Sockels durch eine LED erzeugtes Licht in den Bereich des Betätigungselementes zu lenken, beispielsweise zur Realisierung einer Ambientebeleuchtung des Betätigungselementes. Gleichzeitig wird durch eine solche Lichtlleiterdurchführungsausnehmung sichergestellt, dass der empfindliche Lichtleiter in einer geordneten Weise verlegt - mithin sogar geführt - wird, so dass einer willkürlichen Verlegung des Lichtleiters, die mit einer gesteigerten Gefahr der Beschädigung bei der Installation einhergeht, wirksam vorgebeugt wird. Dabei kann auch der Sockel eine solche, zu der Lichtlleiterdurchführungsausnehmung der Deckplatten korrespondierende, Lichtlleiterdurchführungsausnehmung aufweisen.

In einer Weiterbildung der erfindungsgemäßen Anordnung weist die zweite Deckplatte Ankopplungselemente, insbesondere Öffnungen, Rast- oder Verschraubungselemente, auf, um eine Ankopplung an ein Aufputzgehäuse zu ermöglichen. Nachfolgend ist die Erfindung unter Bezugnahme auf die beigefügten Figuren anhand dreier Ausführungsbeispiele beschrieben. Es zeigen:
- **Fig. 1:**: eine schematische perspektive Explosionsseitenansicht einer erfindungsgemäßen Anordnung, wobei dieselbe Sockeleinheit des Schaltgerätes, mit unterschiedlichen Deckplatten verrastet werden kann (links: erste Deckplatte, mittig: zweite Deckplatte und rechts: dritte Deckplatte),
- **Fig. 2:**: eine schematische perspektive Rückansicht eines mit der zweiten Deckplatte gefügten Schaltgerätes der Gebäudeinstallationstechnik und
- **Fig. 3:**: eine schematische perspektive Rückansicht eines mit der dritten Deckplatte gefügten Schaltgerätes der Gebäudeinstallationstechnik (rechts) sowie die isolierte dritte Deckplatte (links).

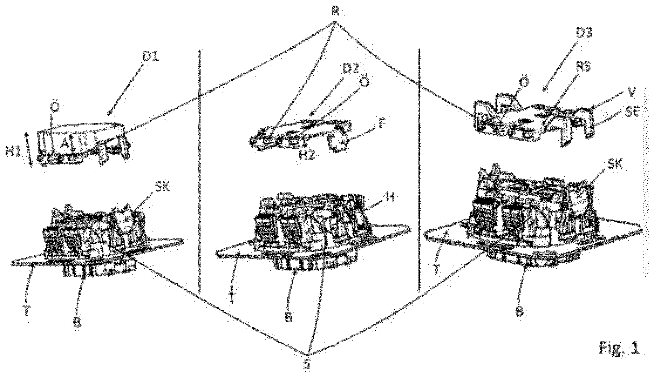

Figur 1 zeigt eine schematische perspektive Explosionsseitenansicht einer erfindungsgemäßen Anordnung. Eine erfindungsgemäße Anordnung umfasst ein Schaltgerät der Gebäudeinstallationstechnik, insbesondere einen Schalter oder einen Taster, und eine erste, eine zweite und eine dritte Deckplatte D1, D2, D3. Das Schaltgerät der Gebäudeinstallationstechnik weist ein Betätigungselement B sowie eine an eine Energieversorgung anschließbare Sockeleinheit S auf, wobei die Deckplatten D1, D2, D3 Rastelemente R zum jeweiligen Anschluss an die Sockeleinheit S aufweisen. Dabei weist die erste Deckplatte D1 eine Höhe H1 von mindestens 1 cm zur Einhausung einer Elektronikbaugruppe auf. Die zweite Deckplatte D2 ist eine ebene Deckplatte mit einer Höhe H2 von weniger als 1 cm zur Abdeckung einer Rückseite der Sockeleinheit S. Die dritte Deckplatte D3 ist eine Vor-V und Rücksprünge RS aufweisende Deckplatte, wobei die Vorsprünge V zur Einhausung von Spreizkrallen SK ausgebildet sind. Dabei weist jede Deckplatte D1, D2, D3 Kabeleinführungsöffnungen Ö auf, insbesondere um Leitungen zur Energieversorgung und/oder Steuerleitungen aufzunehmen.

Wie in Figur 1 erkennbar ist, erlaubt es die erfindungsgemäße Anordnung trotz der Verwendung nur eines Sockels, die für die jeweilige geplante Nutzung gewünschte und optimierte Deckplatte zu verwenden. Damit kann nicht nur der Bauraum in der Dose optimal ausgenutzt werden, sondern durch Skalierungseffekte die Kosten des Sockels (da für unterschiedliche Deckplatten nutzbar) verringert werde.

Ebenfalls ist in Figur 1 gezeigt, dass die erste Deckplatte D1 einen Absatz bezüglich der Kabeleinführungsöffnungen Ö aufweist. Dieser vermeintliche Nachteil wird bewusst in Kauf genommen, um in den Genuss der vorteilhaften Effekte der erfindungsgemäßen Anordnung zu kommen.

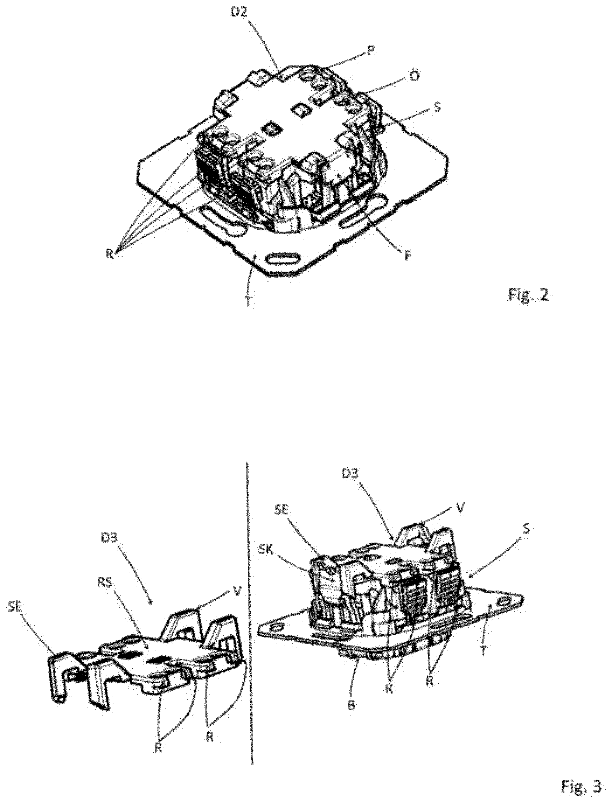

Figur 2 ist eine schematische perspektive Rückansicht eines mit der zweiten Deckplatte D2 gefügten Schaltgerätes der Gebäudeinstallationstechnik. Die zweite Deckplatte D2 ist eine ebene Deckplatte mit einer Höhe H2 von weniger als 1 cm zur Abdeckung einer Rückseite der Sockeleinheit S, wobei der Einbautiefenbedarf durch die ebene Geometrie der zweiten Deckplatte D2 minimiert ist.

In Figur 3 ist eine schematische perspektive Rückansicht eines mit der dritten Deckplatte D3 gefügten Schaltgerätes der Gebäudeinstallationstechnik (rechts) sowie der isolierten dritten Deckplatte D3 (links). Die Einhausung SE der Spreizkrallen SK verringert das Verletzungsrisiko. Zudem ist erkennbar, dass zwischen den Vorsprüngen V ein Rücksprung RS ausgebildet ist, der als einbautiefenminimierende Aufnahme für Kabelgut oder ein Funktionsmodul gemäß DE 10 2023 133 998 B3 dienen kann.

### Bezugszeichenliste

- A: Absatz
- B: Betätigungselement
- D1: erste Deckplatte
- D2: zweite Deckplatte
- D3: dritte Deckplatte
- F: Flansch
- H: Halterung
- H1, H2: Höhe
- Ö: Kabeleinführungsöffnung
- P: Phase
- R: Rastelement
- RS: Rücksprung
- S: Sockeleinheit
- SE: Einhausung
- SK: Spreizkrallen
- T: Tragring

## Patentansprüche

1. Anordnung umfassend ein Schaltgerät der Gebäudeinstallationstechnik, insbesondere einen Schalter oder einen Taster, und eine erste, eine zweite und eine dritte Deckplatte (D1, D2, D3), wobei das Schaltgerät der Gebäudeinstallationstechnik ein Betätigungselement (B) sowie eine an eine Energieversorgung anschließbare Sockeleinheit (S) aufweist, wobei die Deckplatten (D1, D2, D3) Rastelemente (R) zum jeweiligen Anschluss an die Sockeleinheit (S) aufweisen, wobei die erste Deckplatte (D1) eine Höhe (H1) von mindestens 1 cm zur Einhausung einer Elektronikbaugruppe ist, wobei die zweite Deckplatte (D2) eine ebene Deckplatte mit einer Höhe (H2) von weniger als 1 cm zur Abdeckung einer Rückseite der Sockeleinheit (S) ist und wobei die dritte Deckplatte (D3) eine Vor- (V) und Rücksprünge (RS) aufweisende Deckplatte ist, wobei die Vorsprünge (V) zur Einhausung (SE) von Spreizkrallen (SK) ausgebildet sind, wobei jede Deckplatte (D1, D2, D3) Kabeleinführungsöffnungen (Ö) aufweist.

2. Anordnung nach Anspruch 1, **dadurch gekennzeichnet, dass** die erste Deckplatte (D1) einen Absatz bezüglich der Kabeleinführungsöffnungen (Ö) aufweist.

3. Anordnung nach Anspruch 1 oder 2, **dadurch gekennzeichnet, dass** die Kabeleinführungsöffnungen (Ö) eine Phase (P) zur vereinfachten Kabeleinführung aufweisen.

4. Anordnung nach einem der Ansprüche 1 bis 3, **dadurch gekennzeichnet, dass** die Anzahl der Rastelemente (R) mindestens vier beträgt.

5. Anordnung nach Anspruch 4, **dadurch gekennzeichnet, dass** im Bereich jeder Kabeleinführungsöffnung (Ö) mindestens ein Rastelement (R) angeordnet ist.

6. Anordnung nach einem der Ansprüche 1 bis 5, **dadurch gekennzeichnet, dass** die erste Deckplatte (D1) bevorzugt als Gehäuse mit Deckel aber ohne Boden ausgeführt ist.

7. Anordnung nach einem der Ansprüche 1 bis 6, **dadurch gekennzeichnet, dass** die zweite Deckplatte (D2) einen Flansch (F) aufweist, der in eine Halterung (H) für Spreizkrallen (SK) der Sockeleinheit (S) eingesetzt ist.

8. Anordnung nach einem der Ansprüche 1 bis 7, **dadurch gekennzeichnet, dass** die erste, zweite und dritte Deckplatte (D1, D2, D3) auf ihrer, im Einbau zur Wand weisenden, Rückseite eine ausnehmungslose, zusammenhängende Fläche von mindestens 5,5cm² aufweist.

9. Anordnung nach einem der Ansprüche 1 bis 7, **dadurch gekennzeichnet, dass** die Anordnung eine vierte Deckplatte aufweist, die einen zusätzlichen Klemmblock aufweist, so dass ein zweibahniges Schaltgerät zu einem dreibahnigen Schaltgerät wird.

10. Anordnung nach einem der Ansprüche 1 bis 9, **dadurch gekennzeichnet, dass** die Deckplatten (D1, D2, D3) eine Lichtlleiterdurchführungsausnehmung aufweisen, um einen Lichtleiter vom Bereich der Deckplatten (D1, D2, D3) in den Bereich des Betätigungselementes (B) zu lenken.

11. Anordnung nach einem der Ansprüche 1 bis 10, **dadurch gekennzeichnet, dass** die zweite Deckplatte (D2) Ankopplungselemente, insbesondere Öffnungen, Rast- oder Verschraubungselemente, aufweist, um eine Ankopplung an ein Aufputzgehäuse zu ermöglichen.
